# EUROPÄISCHE PATENTSCHRIFT

(11) **EP 3 426 541 B1**
(45) Veröffentlichungstag und Bekanntmachung des Hinweises auf die Patenterteilung: **10.06.2020**
(21) Anmeldenummer: 17701332.3
(22) Anmeldetag: 25.01.2017
(51) Int. Cl.: B62D 5/04, F16H 55/24, F16H 57/039, F16H 57/12, F16C 25/06, F16H 1/16, F16H 57/021, F16H 57/022

(54) **LENKGETRIEBE**
STEERING GEAR
MÉCANISME DE DIRECTION

(30) Priorität: 08.03.2016 DE 102016104150
(43) Veröffentlichungstag der Anmeldung: 16.01.2019
(73) Patentinhaber: Robert Bosch Automotive Steering GmbH, 73527 Schwäbisch Gmünd (DE)
(72) Erfinder: HAFERMALZ, Jens-Uwe, 73116 Wäschenbeuren (DE); KNEER, Ekkehard, 73240 Wendlingen (DE)
(74) Vertreter: Bee, Joachim
(86) Internationale Anmeldenummer: PCT/EP2017/051538
(87) Internationale Veröffentlichungsnummer: WO 2017/153083

(56) Entgegenhaltungen:
- DE-A1-102009 054 655
- DE-A1-102012 103 146
- US-A1- 2009 255 751

## Beschreibung

Die Erfindung betrifft ein Lenkgetriebe für ein Hilfskraftlenksystem eines Kraftfahrzeugs.

Bei den meisten Kraftfahrzeugen werden Hilfskraftlenksysteme verbaut, die beim Lenken ein unterstützendes Drehmoment erzeugen und dadurch das von dem Fahrer auf die Lenksäule aufzubringende Lenkmoment reduzieren.

Die bekannten Hilfskraftlenksysteme basieren auf einem Lenkgetriebe, das die Antriebsleistung eines hydraulischen oder elektrischen Antriebs übersetzt und auf beispielsweise die Lenksäule überträgt. Derartige Lenkgetriebe sind regelmäßig in Form eines Schraubwälzgetriebes und insbesondere als Schraubradgetriebe oder Schneckengetriebe ausgebildet, d.h. diese umfassen ein Zahnrad, das direkt oder indirekt mit der Lenkstange verbunden ist, sowie ein damit kämmendes, über eine Welle von dem Antrieb angetriebenes Ritzel.

Als problematisch bei derartigen Lenkgetrieben hat sich Getriebespiel gezeigt, das sich aufgrund von Bauteiltoleranzen, unterschiedlicher Wärmedehnungen der Getriebeelemente, von Verschleiß und eines Setzens des Materials bei Zahnrädern aus Kunststoff ausbildet. Insbesondere bei einem sogenannten Wechsellenken, d.h. bei einem direkt aufeinander folgenden Lenken mit wechselnder Lenkeinschlagsrichtung, erzeugt ein solches Getriebespiel unerwünschte Geräusche, die aus dem abwechselnden Anlegen gegenüberliegender Flanken der Zähne von Ritzel und Zahnrad resultieren.

Bekannt ist, dieses Getriebespiel dadurch zu eliminieren, dass die Ritzelwelle verschwenkbar um eine Achse, die senkrecht zur der Längsachse der Ritzelwelle und in einem Abstand zu dem Verzahnungseingriff von Ritzel und Zahnrad verläuft, gelagert ist und mittels eines oder mehrerer Federelemente gegen das Zahnrad gedrückt wird (sogenannte Anfederung der Ritzelwelle). Die Verschwenkbarkeit der Ritzelwelle wird dabei regelmäßig in eine der zwei Lagerungen, über die die Ritzelwelle endseitig gelagert ist, integriert. Diese Lagerung wird als "Festlager" bezeichnet. Die Lagerung im Bereich des anderen Endes ist dann mit Spiel ausgeführt (sogenanntes "Loslager"), um die durch die Schwenkbewegung hervorgerufene Auslenkung zu ermöglichen. Das Festlager ist regelmäßig antriebsseitig vorgesehen, während das Loslager an dem freien Ende der Ritzelwelle vorgesehen ist. Das oder die Federelemente zum Andrücken des Ritzels an das Zahnrad können dabei sowohl in das Loslager als auch das Festlager integriert sein.

Ein solches Lenkgetriebe, bei dem die Federkraft für die Anfederung mittels des Festlagers erzeugt wird, ist beispielsweise aus der WO 2011/073089 A1 bekannt. Dort ist vorgesehen, das Wälzlager, das die Ritzelwelle im Bereich des Festlagers aufnimmt, außenseitig in einer Schwenkhülse zu lagern. Die Schwenkhülse umfasst eine Lagerhülse, die das Wälzlager weitgehend spielfrei aufnimmt, und einen Außenring, der weitgehend spielfrei in einer Aufnahme eines Gehäuses des Lenkgetriebes gehalten ist, wobei der Außenring und die Lagerhülse über mehrere Torsionsstege verbunden sind, die bei einem Verdrehen von Außenring zu Lagerhülse tordiert werden. Nach der Montage des Lenkgetriebes sind die Torsionsstege derart tordiert, dass die dadurch erzeugte elastische Rückstellwirkung die Anfederung der Ritzelwelle bewirkt.

Eine zur WO 2011/073089 A1 ähnliche Ausgestaltung eines Lenkgetriebes ist in der DE 10 2012 103 146 A1 beschrieben. Dort ist der Schwenkring jedoch als separates Bauteil ausgeführt. Dabei umfasst dieser einen Innenring sowie einen mit dem Innenring über zwei Torsionsstege verbundenen Außenring. Der Außenring dient der Lagerung des Festlagers in dem Gehäuse des Lenkgetriebes, während der Innenring zwischen dem Wälzlager und einem radial nach innen umgebogenen Ende der Lagerhülse verspannt ist.

Um trotz Verschleißes und trotz eines Materialsetzens über die gesamte vorgesehene Gebrauchsdauer des Lenkgetriebes eine ausreichend große, d.h. eine ungewollte Geräuschentwicklung infolge von Getriebespiel im ausreichenden Maße vermeidende Anfederung zu gewährleisten, muss diese, auch unter Berücksichtigung der möglichen Bauteiltoleranzen, für den Neuzustand des Lenkgetriebes relativ groß dimensioniert sein. Dies führt jedoch zu einer entsprechend hohen Reibung im Lenkgetriebe im Neubeziehungsweise wenig verschlissenen Zustand, was wiederum grundsätzlich zu einem tendenziell als schlecht empfundenen Lenkgefühl führt. Die Auslegung der Anfederung der Ritzelwelle ist daher regelmäßig ein Kompromiss, der einerseits auf eine vorteilhafte Geräuschentwicklung über der gesamten vorgesehenen Gebrauchsdauer und andererseits auf ein gutes Lenkgefühl infolge relativ geringer Reibung im Lenkgetriebe, insbesondere im Neuzustand des Lenkgetriebes, abstellt. Eine hohe Reibung im Lenkgetriebe wirkt sich zudem negativ auf den Wirkungsgrad des Lenkgetriebes aus.

Ausgehend von diesem Stand der Technik lag der Erfindung die Aufgabe zugrunde, ein verbessertes Lenkgetriebe für ein Hilfskraftlenksystem eines Kraftfahrzeugs anzugeben. Insbesondere sollte ein Lenkgetriebe angegeben werden, bei dem auf konstruktiv einfache Weise ein möglichst gutes Lenkgefühl bei über der Gebrauchsdauer ausreichend geringer Geräuschentwicklung erreichbar ist.

Diese Aufgabe wird durch ein Lenkgetriebe gemäß dem Patentanspruch 1 gelöst. Vorteilhafte Ausgestaltungen dazu sind Gegenstände der abhängigen Patentansprüche und ergeben sich aus der nachfolgenden Beschreibung der Erfindung.

Der Erfindung liegt der Gedanke zugrunde, die Steifigkeit der Anfederung einer als Schraubritzelwelle ausgebildeten Ritzelwelle des Lenkgetriebes veränderbar auszugestalten, um einerseits eine ausreichend große Anfederung zu realisieren, durch die über der gesamten vorgesehenen Gebrauchsdauer des Lenkgetriebes wirksam ein Getriebespiel vermieden und folglich ein vorteilhaftes Geräuschverhalten erreicht werden kann, während andererseits die Anfederung und damit die Reibung im Getriebe relativ gering gehalten wird, wenn dies für die Erzielung eines guten Lenkgefühls vorteilhaft ist. Dabei soll ausgenutzt werden, dass für die Beurteilung des Lenkgefühls insbesondere dasjenige relevant ist, dass sich im fahrenden Zustand eines das Lenkgetriebe umfassenden Kraftfahrzeugs einstellt, während eine unvorteilhafte Geräuschentwicklung insbesondere im Stillstand und/oder beim langsamen Fahren bis beispielsweise maximal 20 km/h bei einem Wechsellenken auftreten kann. Berücksichtigt man, dass die Unterstützungsleistungen, die von einem Hilfskraftlenksystem und somit von dem mit dem Lenkgetriebe verbundenen Antrieb erzeugt werden müssen, im Stillstand und beim langsamen Fahren erheblich höher als im fahrenden Zustand des Kraftfahrzeugs sind, können diese unterschiedlichen, über das Lenkgetriebe übertragenen Unterstützungsleistungen ausgenutzt werden, um die Veränderlichkeit der Anfederung zu realisieren.

Dementsprechend ist ein Lenkgetriebe vorgesehen, das zumindest ein Zahnrad, ein damit kämmendes Schraubritzel und eine das Schraubritzel umfassende Schraubritzelwelle aufweist, wobei die Schraubritzelwelle auf der einen Seite des Schraubritzels in einem Festlager gelagert ist, das ein Drehlager, das eine innere Lagerschale, in der die Schraubritzelwelle aufgenommen ist, und eine äußere Lagerschale, die direkt oder indirekt mit einem Innenring eines Schwenkrings verbunden ist, umfasst, wobei der Innenring über mindestens einen Torsionssteg um eine quer zur Längsrichtung (Erstreckung entlang der Längsachse) der Schraubritzelwelle gelegene Schwenkachse verschwenkbar mit einem Außenring des Schwenkrings verbunden ist und wobei der Außenring direkt oder indirekt in einem Gehäuse des Lenkgetriebes gelagert (und dabei insbesondere auch bezüglich der Längsrichtung der Schraubritzelwelle abgestützt) ist. Erfindungsgemäß gekennzeichnet ist ein solches Lenkgetriebe dadurch, dass der Torsionssteg auf zumindest einer Seite bezüglich der Längsrichtung der Schraubritzelwelle in einem Abstand zu einer Stützfläche verläuft, wobei dieser Abstand derart bemessen ist, dass der Torsionssteg die Stützfläche nicht kontaktiert, wenn die Schraubritzelwelle nicht mit einem Drehmoment belastet ist, und zumindest teilweise kontaktiert, wenn die Schraubritzelwelle mit einem Betriebsdrehmoment, d.h. einem im vorgesehenen Betrieb des Lenkgetriebes vorgesehenen Drehmoments, belastet ist. Vorzugsweise kann dabei vorgesehen sein, dass der Torsionssteg die Stützfläche vollständig kontaktiert, wenn die Schraubritzelwelle mit dem höchsten im Betrieb vorgesehenen Betriebsdrehmomentbelastet ist.

Infolge der Ausgestaltung des Ritzels als Schraubritzel bewirkt das auf die Schraubritzelwelle ausgeübte Drehmoment eine Belastung in Längsrichtung der Schraubritzelwelle, die über den Schwenkring auf das Gehäuse übertragen wird, wobei sich der Torsionssteg des Schwenkrings infolge seiner elastischen Ausgestaltung in der entsprechenden Richtung deformiert, wodurch sich dieser zumindest teilweise an der Stützfläche anlegt. Dadurch wird funktional die freie Länge des Torsionsstegs, d.h. die Distanz zwischen den Einspannungen des Außenrings und des Innenrings des Schwenkrings im Bereich des Torsionsstegs, reduziert, was bei einem gleich bleibenden Schwenkwinkel, mit dem die Schraubritzelwelle zur Erzielung der Anfederung ausgelenkt ist, zu einer stärkeren Verdrillung und damit zu einer Erhöhung der Anfederung führt. Im Ergebnis kann somit eine relativ starke Anfederung erreicht werden, wenn die Schraubritzelwelle mit einem hohen Drehmoment belastet wird, wie dies insbesondere der Fall ist, wenn eine Lenkbewegung im Stillstand und beim langsamen Fahren des Kraftfahrzeugs ausgeführt wird, während eine relativ schwache Anfederung mit einer entsprechend geringen Reibung und folglich einem entsprechend vorteilhaften Lenkgefühl realisiert wird, wenn das auf die Schraubritzelwelle ausgeübte Drehmoment relativ gering (oder null) ist, wie dies insbesondere der Fall ist, wenn eine Lenkbewegung im fahrenden Zustand des Kraftfahrzeugs ausgeführt wird.

In einer bevorzugten Ausgestaltung des erfindungsgemäßen Lenkgetriebes kann vorgesehen sein, dass auf beiden Seiten der Schraubritzelwelle entsprechende Stützflächen vorgesehen sind. Dadurch kann die vorteilhafte Wirkung einer variablen Anfederung für beide Drehrichtungen der Schraubritzelwelle und folglich für beide Richtungen des dadurch unterstützend bewirkten Lenkeinschlags der gelenkten Räder eines Kraftfahrzeugs erreicht werden.

In einer insbesondere konstruktiv vorteilhaften Ausgestaltung eines erfindungsgemäßen Lenkgetriebes kann vorgesehen sein, dass die oder zumindest eine der Stützflächen in etwa parallel zu dem Torsionssteg verlaufen, wenn die Ritzelwelle nicht mit einem Drehmoment belastet ist. Auf diese Weise kann zudem eine sich in etwa proportional mit einer Zunahme des auf die Schraubritzelwelle ausgeübten Drehmoments erhöhende Steifigkeit der Anfederung der Schraubritzelwelle realisiert werden.

Ebenfalls kann vorgesehen sein, dass die oder zumindest eine der Stützflächen einen Verlauf aufweisen, der bezüglich der Richtung, die radial zu der Längsachse der Schraubritzelwelle ausgerichtet ist, abgewinkelt oder gekrümmt ist. Bei einer gekrümmten Ausgestaltung sollte weiterhin bevorzugt vorgesehen sein, dass der oder die Krümmungsradien größer als der Krümmungsradius der für eine Kontaktierung mit der entsprechenden Stützfläche vorgesehenen Seite des Torsionsstegs ist, der sich rechnerisch aus einerseits der größten Distanz zwischen der entsprechenden Stützfläche und dem Torsionssteg und andererseits der Länge desjenigen Abschnitts des Torsionsstegs, der zu der Stützfläche benachbart verläuft, ergibt, wenn die Ritzelwelle mit einem und insbesondere dem maximalen Betriebsdrehmoment belastet ist. Auf diese Weise kann insbesondere eine nicht-proportionale Erhöhung der Steifigkeit der Anfederung der Schraubritzelwelle in Abhängigkeit von einer Zunahme des auf die Schraubritzelwelle ausgeübten Drehmoments erreicht werden, wodurch die vorteilhaften Wirkungen einerseits hinsichtlich der Vermeidung einer unerwünschten Geräuschentwicklung und andererseits hinsichtlich eines möglichst vorteilhaften Lenkgefühls noch besser abgestimmt werden können.

Besonders groß ist die erfindungsgemäß angestrebte Wirkung, wenn, wie in einer bevorzugten Ausgestaltung des erfindungsgemäßen Lenkgetriebes vorgesehen, die Schraubritzelwelle ausschließlich mittels des Schwenkrings hinsichtlich einer Belastung in ihrer Längsrichtung direkt oder indirekt an dem Gehäuse abgestützt ist, weil dadurch eine elastische Deformation des Torsionsstegs in dieser Längsrichtung der Schraubritzelwelle, die für ein variables Anlegen des Torsionsstegs an die Stützfläche ausgenutzt wird, besonders ausgeprägt sein kann.

Die Erfindung betrifft weiterhin ein Hilfskraftlenksystem mit einem erfindungsgemäßen Lenksystem sowie ein Kraftfahrzeug mit einem solchen Hilfskraftlenksystem.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die Erfindung wird nachfolgend anhand eines in den Zeichnungen dargestellten Ausführungsbeispiels näher erläutert. In den Zeichnungen zeigt:
- Fig. 1:: ein erfindungsgemäßes Lenkgetriebe in einer Seitenansicht;
- Fig. 2:: einen Längsschnitt durch das Lenkgetriebe entlang der Schnittebene II - II in der Fig. 1;
- Fig. 3:: einen vergrößert dargestellten Ausschnitt aus einem Längsschnitt durch das Lenkgetriebe entlang der Schnittebene III - III in der Fig. 1;
- Fig. 4:: den Ausschnitt IV in der Fig. 3 in vergrößerter Darstellung ; und
- Fig. 5:: eine Aufsicht auf den Schwenkring des Lenkgetriebes in isolierter Darstellung.

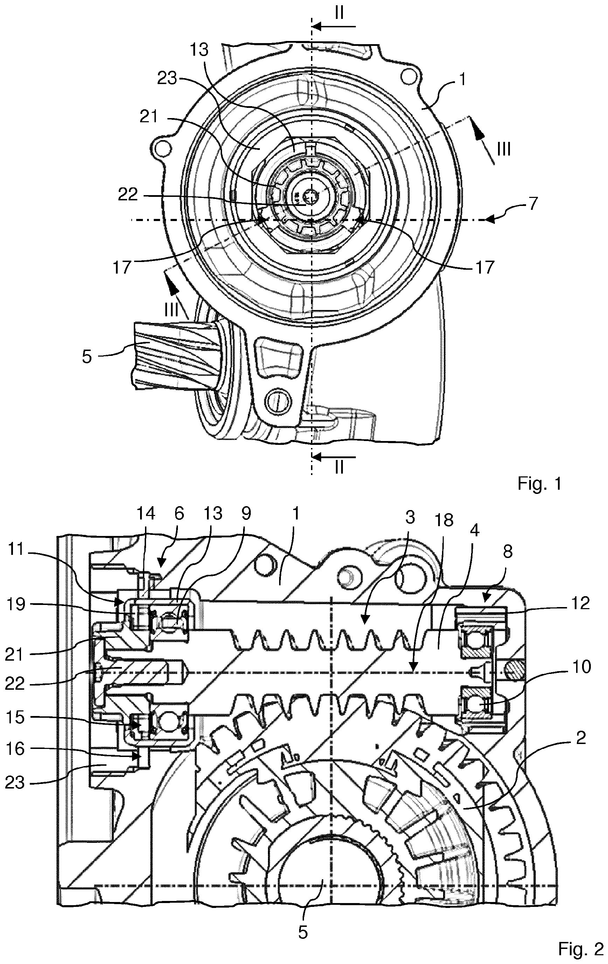

Die Fig. 1 bis 5 zeigen die wesentlichen Bestandteile einer Ausgestaltung eines erfindungsgemäßen Lenkgetriebes für ein Hilfskraftlenksystem eines Kraftfahrzeugs. Dieses umfasst ein Gehäuse 1, innerhalb dessen ein Zahnrad 2 sowie ein mit dem Zahnrad 2 kämmendes Schraubritzel 3 gelagert sind. Das Schraubritzel 3 und eine das Schraubritzel 3 umfassende Schraubritzelwelle 4 sind in Form einer Schnecke integral ausgebildet.

Das Zahnrad 2 ist fest auf einer Abtriebswelle 5 (vgl. Fig. 1) des Lenkgetriebes befestigt. Diese Abtriebswelle 5, die im gezeigten Ausgestaltungsbeispiel eine Verzahnung aufweist, kann beispielsweise mit einer zumindest in einem Abschnitt als Zahnstange ausgebildeten Lenkstange kämmen, wodurch diese eine Translationsbewegung durchführt, die in bekannter Weise über Radlenkhebel (nicht dargestellt) in eine Schwenkbewegung gelenkter Räder (nicht dargestellt) eines Kraftfahrzeugs übersetzt werden kann. Bei der Abtriebswelle 5 kann es sich aber auch um eine Lenksäule des Hilfskraftlenksystems handeln, die mit einem Lenkrad verbunden ist und über ein Lenkritzel auf die Lenkstange wirkt.

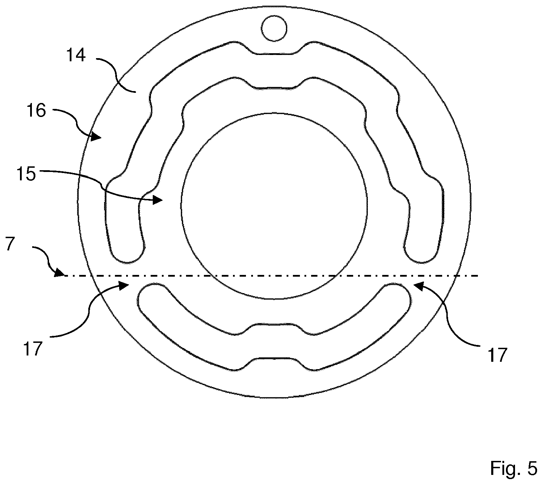

Die Schraubritzelwelle 4 weist ein antriebsseitiges Ende auf, über das diese mit der Abtriebswelle eines nicht dargestellten Antriebs (z.B. ein Elektromotor) verbindbar ist. Im Bereich dieses antriebsseitigen Endes ist die Schraubritzelwelle 4 mittels einer ersten Lagerung in dem Gehäuse 1 gelagert. Diese Lagerung ist als Festlager 6 ausgebildet, das ein Verschwenken der Schraubritzelwelle 4 um eine Schwenkachse 7 (vgl. Fig. 1 und Fig. 5) zulässt.

Dieses Verschwenken bewirkt ein Auslenken des dem antriebsseitigen Ende gegenüberliegenden freien Endes der Schraubritzelwelle 4, die dort mittels eines Loslagers 8 in einer entsprechenden Aufnahme des Gehäuses 1 gelagert ist. Dieses Loslager 8 ist so ausgebildet, dass es die sich aus dem Verschwenken der Schraubritzelwelle 4 ergebende Auslenkung dieses freien Endes zulässt.

Sowohl das Festlager 6 als auch das Loslager 8 umfassen jeweils ein Drehlager in Form eines Wälzlagers 9, 10, beispielsweise Kugelwälzlagers. In inneren Lagerschalen dieser Wälzlager 9, 10 sind die entsprechenden Abschnitte der Schraubritzelwelle 4 gelagert, während äußere Lagerschalen der Wälzlager 8, 9 in jeweils einer Lagervorrichtung 11, 12 gelagert sind, die wiederum in entsprechenden Aufnahmen des Gehäuses 1 gelagert sind. Die Lagervorrichtungen 11, 12 sind konstruktiv so ausgebildet, dass diese - im Fall des Festlagers 6 - das Verschwenken der Schraubritzelwelle 4 um die Schwenkachse 7 und - im Fall des Loslagers 8 - das Auslenken des freien Endes der Schraubritzelwelle 4 ermöglichen.

Hierzu umfasst die Lagervorrichtung 11 des Festlagers 6 eine Lagerhülse 13 mit kreisförmigem Querschnitt, die innenseitig in einem ersten Längsabschnitt das Wälzlager 9 und in einem zweiten Längsabschnitt einen Innenring 15 eines Schwenkrings 14 aufnimmt. Der Innenring 15 des Schwenkrings 14 ist unter Zwischenschaltung einer Stützscheibe 19 drehfest und axial gesichert innerhalb der Lagerhülse 13 gelagert, wobei sich der Innenring 15 unter Zwischenschaltung einer Zwischenscheibe 20 an der äußeren Lagerschale des Wälzlagers 9 abstützt. Der Schwenkring 14 umfasst neben dem Innenring 15 noch einen Außenring 16. Der Außenring 16 ist über zwei Torsionsstege 17 (vgl. Fig. 1 und 3 bis 5) mit dem Innenring 15 verbunden. Der Außenring 16, der Innenring 15 und die Torsionsstege 17 sind dazu beispielsweise einstückig aus z.B. Federstahl ausgebildet.

Eine axiale Lagesicherung des Wälzlagers 9 auf der Schraubritzelwelle 4 erfolgt unter Zwischenschaltung eines Druckstücks 21 mittels einer Schraube 22, die in ein Innengewinde, das in das entsprechende Ende der Schraubritzelwelle 4 integriert ist, eingeschraubt ist. Eine axiale Lagesicherung des Außenrings 16 des Schwenkrings 14 innerhalb des Gehäuses 1 erfolgt mittels eines Schraubrings 23, der ein Außengewinde aufweist, das in ein entsprechendes Innengewinde des Gehäuses 1 eingeschraubt ist.

Die zwei Torsionsstege 17 bilden die Schwenkachse 7 aus, um die der Außenring 16 relativ zu dem Innenring 15 verschwenkbar ist. Die Torsionsstege 17 und damit die Schwenkachse 7 verlaufen dabei jedoch nicht durch das Zentrum des Schwenkrings 14 und damit des Querschnitts der Schraubritzelwelle 4, sondern radial versetzt dazu (vgl. Fig. 5). Die Schwenkachse 7 schneidet somit nicht die Längsachse 18 der Schraubritzelwelle 4.

Durch den radialen Versatz der Torsionsstege 17 zu dem Zentrum des Schwenkrings 14 wird die Schwenkachse 7 in die Nähe des Außenumfangs der Schraubritzelwelle 4 verlagert, wodurch die Ausbildung von Reaktionsmomenten, die sich infolge der beim Zahneingriff von Schraubritzel 3 und Zahnrad 2 ergebenden Verzahnungskräfte in Verbindung mit dem Abstand der Wirkungslinie dieser Verzahnungskräfte von der Schwenkachse 7 ergeben beziehungsweise ergeben würden, verringert oder vermieden werden können. Zur möglichst vollständigen Vermeidung der Reaktionsmomente ist vorgesehen, dass die Schwenkachse 7 innerhalb derjenigen Tangentialebene liegt, die in dem Berührpunkt der beiden Teil- beziehungsweise Wälzkreise von Zahnrad 2 und Schraubritzel 3 ausgebildet ist.

Die Torsionsstege 17 des Schwenkrings 14 ermöglichen nicht nur ein Verschwenken des Außenrings 16 zu dem Innenring 15 und damit der Schraubritzelwelle 4 relativ zu dem Zahnrad 2 bzw. dem Gehäuse 1 sondern bewirken gleichzeitig die Federkraft, durch die das Schraubritzel 3 der Schraubritzelwelle 4 in die Verzahnung des Zahnrad 2 gedrückt wird, um ein möglichst geringes Getriebespiel und damit eine entsprechend geringe Geräuschentwicklung im Betrieb des Lenkgetriebes, insbesondere beim sogenannten Wechsellenken, zu erreichen. Diese Federkraft ergibt sich daraus, dass bei der Montage des Lenkgetriebes die Schraubritzelwelle 4 soweit infolge eines Kontakts mit dem Zahnrad 2 ausgelenkt wird, dass sich eine ausreichende Torsion der Torsionsstege 17 ergibt, so dass die elastischen Rückstellmomente, die aus der Torsion der Torsionsstege 17 resultieren, entgegen dieser Auslenkung der Schraubritzelwelle 4 wirken und diese somit gegen das Zahnrad 2 beaufschlagen.

Die Steifigkeit dieser Anfederung hängt dabei direkt von der wirksamen Länge der Torsionsstege 17 ab, da ein Verschwenken der Schraubritzelwelle 4 und damit des Innenrings 15 des Schwenkrings 14 gegenüber dem in dem Gehäuse 1 festgelegten Außenring 16 um einen definierten Winkel (z.B. lediglich 0,7°) zu einer mit abnehmender Länge der Torsionsstege 17 zunehmenden Verdrillung führt.

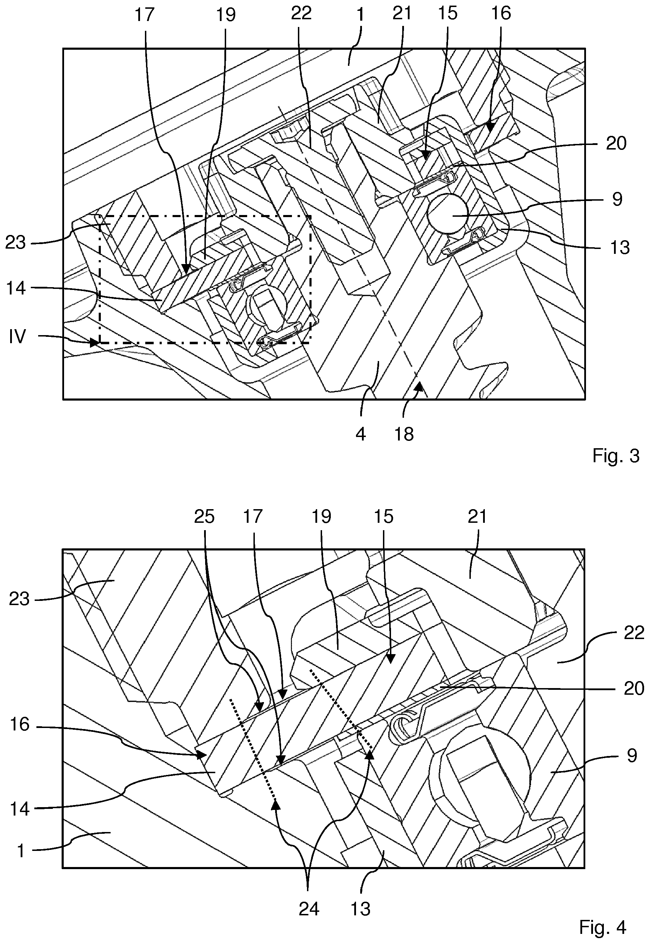

Die maximale wirksame Länge der Torsionsstege 17 ergibt sich aus dem Abstand, der zwischen dem Ende der Einspannung des Außenrings 16 zwischen den entsprechenden Abschnitten des Gehäuses 1 und des Schraubrings 23 einerseits sowie dem Ende der Einspannung des Innenrings 15 zwischen der Stützscheibe 19 und der Zwischenscheibe 20 andererseits ausgebildet ist, wie dies in der Fig. 4 anhand der gepunktet dargestellten Begrenzungslinien 24 dargestellt ist.

Sowohl die für einen Kontakt mit dem Außenring 16 des Schwenkrings 14 vorgesehene Kontaktfläche des Gehäuses 1 als auch die entsprechende Kontaktfläche des Schraubrings 23 erstrecken sich ausgehend von der dazugehörigen Begrenzungslinie 24 der von diesen ausgebildeten Einspannung noch ein Stück weit in Richtung der Längsachse der Schraubritzelwelle 4 und damit benachbart zu den bezüglich der Längsrichtung der Schraubritzelwelle 4 zueinander beabstandeten Seiten des dazugehörigen Torsionsstegs 17, wobei infolge eines in diesen Kontaktflächen ausgebildeten Absatzes, im Bereich dessen die Kontaktflächen jeweils eine erfindungsgemäße Stützfläche 25 ausbilden, ein Abstand zwischen diesen und den benachbarten Seiten des jeweiligen Torsionsstegs 17 ausgebildet ist, solange die Schraubritzelwelle 4 nicht oder lediglich mit einem relativ kleinen Drehmoment belastet ist. Infolge dieser Abstände, die beispielsweise ca. 0,05 mm betragen können, entspricht die wirksame Länge der Torsionsstege 17 der maximalen Länge und damit jeweils dem Abstand zwischen deinen beiden dazugehörigen Begrenzungslinien 24. Aufgrund dieser relativ großen wirksamen Länge der Torsionsstege 17 ist die Steifigkeit der Anfederung der Schraubritzelwelle 4, die sich geometrisch aus der Auslenkung des Schraubritzels 3 infolge des Kontakts mit dem Zahnrad 2 ergibt, in diesem Zustand des Lenkgetriebes relativ gering.

Wird dagegen die Schraubritzelwelle 4 mittels des mit dieser verbundenen Antriebs (nicht dargestellt) mit einem (relativ großen) Drehmoment belastet, führt dies infolge der gewindeförmigen Verzahnung des Schraubritzels 3 auch zu der Erzeugung von in Längsrichtung der Schraubritzelwelle 4 wirkenden Kräften, die im Wesentlichen ausschließlich über den Schwenkring 14 an dem Gehäuse 1 abgestützt werden, weil eine Verbindung zwischen der Schraubritzelwelle 4 und dem Gehäuse 1 im Bereich des Festlagers 6 ausschließlich über den Schwenkring 14 gegeben ist, während die Lagervorrichtung 12 des Loslagers 8 bezüglich der Längsrichtung der Schraubritzelwelle 4 beweglich innerhalb des Gehäuses 1 gelagert ist. Dabei ist die Richtung der in Längsrichtung der Schraubritzelwelle 4 wirkenden Kräfte abhängig von der Drehrichtung, in der die Schraubritzelwelle 4 mittels des Antriebs rotiert wird, und hängt folglich von der Richtung des vorgesehenen Lenkeinschlag des Kraftfahrzeugs ab.

Infolge der Verformbarkeit der Torsionsstege 17, über die eine auf die Schraubritzelwelle 4 wirkende Längskraft auf das Gehäuse 1 übertragen wird, führt diese zu einer kleinen Längsbewegung der Schraubritzelwelle 4 in der entsprechenden Richtung, die in Abhängigkeit von der Höhe des auf die Schraubritzelwelle 4 wirkenden Drehmoments und damit der durch dieses Drehmoment bewirkten Längskraft zu einem teilweisen oder vollständigen Anlegen der den Stützflächen 25 benachbarten Abschnitte der entsprechenden Seiten der Torsionsstege 17 an den dazugehörigen Stützflächen 25, wodurch sich die wirksame Länge der Torsionsstege 17, die für die Verdrillung infolge der Anfederung der Schraubritzelwelle 4 zur Verfügung steht, verringert. Bei einer unveränderten Auslenkung der Schraubritzelwelle 4 führt folglich diese kleinere wirksame Länge der Torsionsstege 17 zu einer entsprechend höheren Verdrillung der Torsionsstege 17 und damit zu einer relativ hohen Steifigkeit der Anfederung der Schraubritzelwelle 4.

Im Ergebnis kann somit eine relativ geringe Anfederung und damit auch Reibung in der Zahnradpaarung zwischen dem Schraubritzel 3 und dem Zahnrad 2 erreicht werden, wenn das auf die Schraubritzelwelle 4 ausgeübte Drehmoment null oder relativ gering ist, wie dies insbesondere auch der Fall ist, wenn ein das Lenkgetriebe umfassendes Kraftfahrzeug in Fahrt ist. Die so erreichte relativ geringe Reibung führt nicht nur zu einem relativ hohen Wirkungsgrad des Lenkgetriebes sondern insbesondere auch zu einem als angenehm empfundenen Lenkgefühl.

Muss dagegen durch den Antrieb des Hilfskraftlenksystems eine relativ große Unterstützungsleistung aufgebracht werden, wie dies insbesondere bei einem Lenken im Stillstand und beim langsamen Fahren des Kraftfahrzeugs der Fall ist, ist auch das auf die Schraubritzelwelle 4 ausgeübte Drehmoment entsprechend hoch, wodurch infolge eines teilweisen Anlegens der entsprechenden Seiten der Torsionsstege 17 an den Stützflächen 25 die wirksame Länge der Torsionsstege 17 verringert, dadurch deren Verdrillung erhöht und folglich eine Anfederung mit relativ großer Steifigkeit realisiert wird, was zwar mit einer entsprechenden Erhöhung der Reibung in der Zahnradpaarung zwischen dem Schraubritzel 3 und dem Zahnrad 2 einhergeht, das jedoch in der Regel als unproblematisch angesehen wird. Gleichzeitig wird vielmehr jedoch im entsprechenden Maße auch ein Getriebespiel und eine sich daraus ergebende, als nachteilig empfundene Geräuschentwicklung wirkungsvoll vermieden oder verringert.

Um die Wirkung einer Veränderung der wirksamen Längen der Torsionsstege 17 in Abhängigkeit von dem an der Schraubritzelwelle 4 anliegenden Drehmoment weiter zu verstärken können entsprechende Stützflächen 25 nicht nur im Bereich der Einspannung des Außenrings 16 des Schwenkrings 14 sondern ebenso im Bereich der Einspannung des Innenrings 15 des Schwenkrings 14 vorgesehen sein. Dabei können die Stützflächen 25 im Bereich der Einspannung des Innenrings 15 entsprechend zu denjenigen im Bereich der Einspannung des Außenrings 16 ausgebildet sein und folglich beispielsweise in einem im wesentlichen konstanten Abstand und somit parallel zu den dazugehörigen Abschnitten der entsprechenden Seiten der Torsionsstege 17 verlaufen, solange die Schraubritzelwelle 4 nicht mit einem Drehmoment belastet ist.

In den Zeichnungen ist dagegen eine alternative Ausgestaltung für die Stützfläche 25, die zudem lediglich auf einer Seite der einzelnen Torsionsstege 17 vorgesehen sind, dargestellt. Diese verläuft im unbelasteten Zustand der Schraubritzelwelle 4 schräg bezüglich der entsprechenden Seiten der Torsionsstege 17 und kann zudem einen gekrümmten Verlauf aufweisen, wobei der dann von dieser ausgebildete Krümmungsradius vorzugsweise deutlich größer als der Krümmungsradius des dazugehörigen Torsionsstegs 17 ist, der sich rechnerisch aus der größten Distanz a zwischen der entsprechenden Stützfläche 25 und dem Torsionssteg 17 sowie der Länge b des Abschnitts des Torsionsstegs 17, der zu dieser Stützfläche 25 benachbart verläuft, ergibt, wenn die Ritzelwelle 4 mit dem größten vorgesehenen Betriebsdrehmoment belastet ist. Auf diese Weise kann erreicht werden, dass sich die wirksame Länge der einzelnen Torsionsstege 17 nicht in etwa proportionaler Weise mit einer Zunahme des auf die Schraubritzelwelle 4 wirkenden Drehmoments verringert.

Ein weiterer positiver Effekt, der sich mit der Verringerung der wirksamen Länge der Torsionsstege 17 bei zunehmendem auf die Schraubritzelwelle 4 wirkenden Drehmoment ergibt, liegt in einer verbesserten Haltbarkeit für die Torsionsstege 17, die, wie gesagt, im Wesentlichen ausschließlich für die Abstützung der aus einem auf die Schraubritzelwelle 4 wirkenden Drehmoment resultierenden Längskräfte zuständig ist, da mit verringerter wirksamer Länge auch die Auslenkung der Torsionsstege 17 in Längsrichtung der Schraubritzelwelle 4 verringert ist, was sich insbesondere aufgrund der Wechselbelastung, mit der die Torsionsstege 17 belastet werden, vorteilhaft auswirkt.

### Bezuaszeichenliste

- 1: Gehäuse
- 2: Zahnrad
- 3: Schraubritzel
- 4: Schraubritzelwelle
- 5: Abtriebswelle
- 6: Festlager
- 7: Schwenkachse
- 8: Loslager
- 9: Wälzlager des Festlagers
- 10: Wälzlager des Loslagers
- 11: Lagervorrichtung des Festlagers
- 12: Lagervorrichtung des Loslagers
- 13: Lagerhülse
- 14: Schwenkring
- 15: Innenring des Schwenkrings
- 16: Außenring des Schwenkrings
- 17: Torsionssteg
- 18: Längsachse der Schraubritzelwelle / der Lagerhülse
- 19: Stützscheibe
- 20: Zwischenscheibe
- 21: Druckstück
- 22: Schraube
- 23: Schraubring
- 24: Begrenzungslinien der Torsionsstege
- 25: Stützfläche

## Patentansprüche

1. Lenkgetriebe mit einem Zahnrad (2), einem damit kämmenden Schraubritzel (3) und einer das Schraubritzel umfassenden Schraubritzelwelle (4), wobei die Schraubritzelwelle (4) auf der einen Seite des Schraubritzels (3) in einem Festlager (6) gelagert ist, das ein Drehlager, das eine innere Lagerschale, in der die Schraubritzelwelle (4) aufgenommen ist, und eine äußere Lagerschale, die direkt oder indirekt mit einem Innenring (15) eines Schwenkrings (14) verbunden ist, umfasst, wobei der Innenring (15) über mindestens einen Torsionssteg (17) um eine quer zur Längsrichtung (18) der Schraubritzelwelle (4) gelegene Schwenkachse (7) verschwenkbar mit einem Außenring (16) des Schwenkrings (14) verbunden ist und wobei der Außenring (16) direkt oder indirekt in einem Gehäuse (1) des Lenkgetriebes gelagert ist, **dadurch gekennzeichnet, dass** der Torsionssteg (17) auf zumindest einer Seite bezüglich der Längsrichtung (18) der Schraubritzelwelle (4) in einem Abstand zu einer Stützfläche (25) verläuft, wobei dieser Abstand derart bemessen ist, dass der Torsionssteg (17) die Stützfläche (25) nicht kontaktiert, wenn die Schraubritzelwelle (14) nicht mit einem Drehmoment belastet ist, und zumindest teilweise kontaktiert, wenn die Schraubritzelwelle (4) mit einem Betriebsdrehmoment belastet ist.

2. Lenkgetriebe gemäß Anspruch 1, **dadurch gekennzeichnet, dass** auf beiden Seiten des Torsionsstegs (17) entsprechende Stützflächen (25) vorgesehen sind.

3. Lenkgetriebe gemäß Anspruch 1 oder 2, **dadurch gekennzeichnet, dass** die oder zumindest eine der Stützflächen (25) parallel zu dem Torsionssteg (17) verlaufen, wenn die Schraubritzelwelle (4) nicht mit einem Drehmoment belastet ist.

4. Lenkgetriebe gemäß einem der vorhergehenden Ansprüche, **dadurch gekennzeichnet, dass** die oder zumindest eine der Stützflächen (25) einen Verlauf aufweist, der bezüglich der Richtung radial zu der Längsachse (18) der Schraubritzelwelle (4) gekrümmt oder abgewinkelt ist.

5. Lenkgetriebe gemäß Anspruch 4, **dadurch gekennzeichnet, dass** der oder die Krümmungsradien größer als der Krümmungsradius der für eine Kontaktierung mit der entsprechenden Stützfläche (25) vorgesehenen Seite des Torsionsstegs (17) ist, der sich rechnerisch aus der größten Distanz (a) zwischen der entsprechenden Stützfläche (25) und dem Torsionssteg (17) und der Länge (b) des Abschnitts des Torsionsstegs (17), der zu der Stützfläche (25) benachbart verläuft, ergibt, wenn die Schraubritzelwelle (4) mit einem Betriebsdrehmoment belastet ist.

6. Lenkgetriebe gemäß einem der vorhergehenden Ansprüche, **dadurch gekennzeichnet, dass** die Schraubritzelwelle (3) ausschließlich mittels des Schwenkrings (14) bezüglich einer Belastung in ihrer Längsrichtung (18) direkt oder indirekt an dem Gehäuse (1) abgestützt ist.

## Claims

1. Steering gear having a gear wheel (2), a screw pinion (3) meshing therewith and a screw pinion shaft (4) comprising the screw pinion, wherein the screw pinion shaft (4) is mounted in a fixed bearing (6) on one side of the screw pinion (3), which fixed bearing a pivot bearing, which comprises an inner bearing shell, in which the screw pinion shaft (4) is received, and an outer bearing shell, which is connected directly or indirectly to an inner ring (15) of a swivel ring (14), wherein the inner ring (15) is connected to an outer ring (16) of the swivel ring (14) via at least one torsion web (17) such that it is able to swivel about a swivel axis (7) lying transversely to the longitudinal direction (18) of the screw pinion shaft (4) and wherein the outer ring (16) is mounted directly or indirectly in a housing (1) of the steering gear, **characterized in that** the torsion web (17) extends at a spacing from a supporting surface (25) on at least one side relative to the longitudinal direction (18) of the screw pinion shaft (4), wherein this spacing is dimensioned in such a way that the torsion web (17) does not contact the supporting surface (25) when the screw pinion shaft (14) is not loaded by a torque and at least partially contacts the supporting surface when the screw pinion shaft (4) is loaded by an operating torque.

2. Steering gear according to Claim 1, **characterized in that** corresponding supporting surfaces (25) are provided on both sides of the torsion web (17).

3. Steering gear according to Claim 1 or 2, **characterized in that** the supporting surfaces (25), or at least one of the supporting surfaces (25), extend parallel to the torsion web (17) when the screw pinion shaft (4) is not loaded by a torque.

4. Steering gear according to one of the preceding claims, **characterized in that** the supporting surfaces (25), or at least one of the supporting surfaces (25), has a progression which is curved or angled relative to the direction radial to the longitudinal axis (18) of the screw pinion shaft (4) .

5. Steering gear according to Claim 4, **characterized in that** the radius/radii of curvature is/are greater than the radius of curvature of that side of the torsion web (17) which is provided for contacting the corresponding supporting surface (25), which radius of curvature is calculated from the greatest distance (a) between the corresponding supporting surface (25) and the torsion web (17) and the length (b) of the portion of the torsion web (17) which extends adjacent to the supporting surface (25) when the screw pinion shaft (4) is loaded by an operating torque.

6. Steering gear according to one of the preceding claims, **characterized in that**, with regard to a load in its longitudinal direction (18), the screw pinion shaft (3) is supported directly or indirectly on the housing (1) exclusively by means of the swivel ring (14) .

## Revendications

1. Mécanisme de direction comprenant une roue dentée (2), un pignon fileté (3) s'engrenant avec celle-ci et un arbre de pignon fileté (4) comprenant le pignon fileté, l'arbre de pignon fileté (4) étant supporté sur l'un des côtés du pignon fileté (3) dans un palier fixe (6) qui un palier pivotant qui comprend une coque de palier intérieure dans laquelle est reçu l'arbre de pignon fileté (4) et une coque de palier extérieure qui est raccordée directement ou indirectement à une bague intérieure (15) d'une bague pivotante (14), la bague intérieure (15) étant raccordée à une bague extérieure (16) de la bague pivotante (14) par le biais d'au moins une nervure de torsion (17) de manière à pouvoir pivoter autour d'un axe de pivotement (7) situé transversalement à la direction longitudinale (18) de l'arbre de pignon fileté (4) et la bague extérieure (16) étant supportée directement ou indirectement dans un boîtier (1) du mécanisme de direction, **caractérisé en ce que** la nervure de torsion (17) s'étend, sur au moins un côté par rapport à la direction longitudinale (18) de l'arbre de pignon fileté (4), à distance de la surface de support (25), cette distance étant dimensionnée de telle sorte que la nervure de torsion (17) ne vienne pas en contact avec la surface de support (25) lorsque l'arbre de pignon fileté (14) n'est pas sollicité avec un couple et vienne au moins en partie en contact avec elle lorsque l'arbre de pignon fileté (4) est sollicité avec un couple de fonctionnement.

2. Mécanisme de direction selon la revendication 1, **caractérisé en ce que** des surfaces de support correspondantes (25) sont prévues des deux côtés de la nervure de torsion (17).

3. Mécanisme de direction selon la revendication 1 ou 2, **caractérisé en ce que** la surface de support ou au moins l'une des surfaces de support (25) s'étendent parallèlement à la nervure de torsion (17) lorsque l'arbre de pignon fileté (4) n'est pas sollicité avec un couple.

4. Mécanisme de direction selon l'une quelconque des revendications précédentes, **caractérisé en ce que** la surface de support ou au moins l'une des surfaces de support (25) présente une allure qui est courbée ou coudée par rapport à la direction radiale par rapport à l'axe longitudinal (18) de l'arbre de pignon fileté (4).

5. Mécanisme de direction selon la revendication 4, **caractérisé en ce que** le ou les rayons de courbure sont supérieurs au rayon de courbure du côté de la nervure de torsion (17) prévu pour un contact avec la surface de support correspondante (25), qui s'obtient par calcul à partir de la plus grande distance (a) entre la surface de support correspondante (25) et la nervure de torsion (17) et de la longueur (b) de la portion de la nervure de torsion (17) qui s'étend à côté de la surface de support (25) lorsque l'arbre de pignon fileté (4) est sollicité avec un couple de fonctionnement.

6. Mécanisme de direction selon l'une quelconque des revendications précédentes, **caractérisé en ce que** l'arbre de pignon fileté (3) est supporté directement ou indirectement sur le boîtier (1) exclusivement au moyen de la bague pivotante (14) par rapport à une sollicitation dans sa direction longitudinale (18).
